Europäisches Patentamt

European Patent Office

Office européen des brevets

(11) Numéro de publication: **0 409 719 A1**

# DEMANDE DE BREVET EUROPEEN

(21) Numéro de dépôt: **90402051.8**

(22) Date de dépôt: **17.07.90**

(51) Int. Cl.⁵: **G02C 7/10**

(30) Priorité: **19.07.89 FR 8909699**

(43) Date de publication de la demande:
**23.01.91 Bulletin 91/04**

(84) Etats contractants désignés:
**CH DE GB IT LI**

(71) Demandeur: **ETABLISSEMENTS PIERRE ANGENIEUX**
**Usine de Saint-Héand**
**F-42570 Saint-Héand(FR)**

(72) Inventeur: **Corbasson, Gérard**
**26, Avenue Louis Thiollier**
**F-42570 Saint-Héand(FR)**

(74) Mandataire: **Tony-Durand, Serge**
**Cabinet Tony-Durand 77, rue Boissière**
**F-75116 Paris(FR)**

(54) **Verre oculaire destiné à équiper une lunette binoculaire de protection des yeux contre les rayonnements solaires nocifs.**

(57) L'invention concerne un verre oculaire destiné à équiper une lunette binoculaire de protection des yeux contre les rayonnements solaires nocifs.

Ce verre comporte un substrat (5) de verre transparent présentant une face externe convexe (6) dirigée vers les rayonnements et une face interne concave (7) dirigée vers l'oeil à protéger. Ce substrat comporte sur sa face externe au moins un revêtement de filtrage (8), de type passe-bas, pour éliminer les rayons infrarouges nocifs du spectre énergétique solaire.

Le substrat est un verre neutre ou coloré. Il comporte en outre, sur sa face externe, au moins un revêtement transparent de filtrage (9) de type passe-haut ce revêtement de type passe-haut améliore l'élimination des rayons ultra-violets présents dans le rayonnement solaire, partiellement effectuée par le matériau qui constitue le substrat.

Le substrat est revêtu, sur sa face interne concave (7), d'un traitement anti-reflets.

FIG. 5

# VERRE OCULAIRE DESTINÉ À ÉQUIPER UNE LUNETTE BINOCULAIRE DE PROTECTION DES YEUX CONTRE LES RAYONNEMENTS SOLAIRES NOCIFS

La présente invention concerne un verre oculaire destiné à équiper une lunette binoculaire de protection des yeux contre les rayonnements solaires nocifs. Elle s'applique notamment à la protection des yeux contre les effets nocifs des rayonnements ultra-violets (UV) et infra-rouges (IR), présents dans les rayonnements solaires.

Dans la gamme des ultra-violets présents dans le rayonnement solaire terrestre, tout particulièrement en haute montagne, il est souhaitable d'éliminer ceux dont la longueur d'onde est inférieure à 0,400μm, c'est-à-dire tous les UV.A, B et C responsables en particulier des conjonctivites, des ophtalmies et de lésions du cristallin. La nocivité des infrarouges captés lors d'une station prolongée au grand soleil se traduit par des larmoiements et des maux de tête ; l'échauffement du cristallin ainsi provoqué est principalement dû au rayonnement infra-rouge proche (longueurs d'onde comprises entre 0,780μm et 1,2μm).

Par opposition, les verres oculaires doivent laisser passer les rayonnements de longueurs d'onde comprises entre 0,400μm et 0,78μm, zone du spectre visible, avec plus ou moins d'intensité, selon les besoins, de préférence d'une manière uniforme sur cette bande spectrale, pour que les couleurs soient rendues fidèlement.

Dans l'état actuel de l'art, on rencontre assez souvent des verres protecteurs vis à vis de l'ultra-Violet et parfois, également, vis à vis de l'infra-rouge. Ils font appel à des procédés d'absorption liés au matériau constituant les oculaires eux-mêmes, complétés par des traitements.

Ces verres comportent généralement un substrat de verre minéral transparent et coloré, effectuant un filtrage des radiations ultra-violettes ; chacun de ces verres présente une face externe convexe dirigée vers les rayonnements solaires et une face interne concave dirigée vers l'oeil et sa partie externe à protéger. Pour la protection vis à vis des infra-rouges, il est connu d'ajouter sur la face convexe d'un tel oculaire un revêtement transparent de filtrage, de type passe-bas, assurant une coupure nette des rayonnements infra-rouges. Le principal inconvénient de ces verres oculaires, est qu'ils atténuent de manière importante les radiations bleues et que la coupure des radiations ultra-violettes est progressive au lieu d'être abrupte, cette coupure n'étant assurée que par le substrat coloré.

Certains verres oculaires connus pour les lunettes dites de vue comportent, sur un substrat coloré ou non, un revêtement anti-reflets qui permet d'atténuer fortement les effets parasites provoqués par les réflexions (sur la face concave, des rayons visibles provenant de l'arrière, c'est-à-dire dans un sens opposé à celui des rayonnements incidents. Il est à noter que ce revêtement n'a aucun effet sur le filtrage des rayonnements nocifs. Ces verres pour lunettes de vue ne prévoient même pas un revêtement de type passe-bas pour la coupure des rayons infra-rouges.

Les verres de protection contre les rayonnements solaires, décrits plus haut sont démunis de revêtements anti-reflets ; ils ne favorisent donc pas l'état de veille, c'est-à-dire la capacité de percevoir le mouvement des objets situés latéralement par rapport à l'axe de visée centrale de l'oeil. Par ailleurs un autre inconvénient majeur de ces verres réside dans le fait que leur substrat, teinté (couleur marron fréquemment), provoque dans la vision des couleurs une forte dominante dans la couleur correspondante, ce qui peut présenter une gêne pour l'agrément ainsi que pour l'observation et la reconnaissance d'informations colorées. L'inconvénient majeur de ces verres est cependant leur défaut de revêtement anti-reflets et leur incapacité à couper de manière nette et abrupte, les radiations ultra-violettes.

L'invention a pour buts de remédier à ces inconvénients et notamment de permettre des filtrages très nets des rayonnements ultra-violets et infra-rouges, en assurant, dans un mode préféré de réalisation, une transmission uniforme de toutes les couleurs, et en éliminant la lumière parasite provenant de l'arrière de la monture de la lunette solaire.

Ces buts sont atteints grâce à l'utilisation d'un verre oculaire qui peut être coloré, mais de préférence neutre (gris ou incolore), assurant, dans un mode préféré de réalisation, une transmission non sélective des radiations colorées du spectre visible ; l'oculaire comporte des revêtements de filtrage passe-bas mais aussi passe-haut, de type dichroïque, assurant une coupure nette des rayonnements infra-rouges et ultra-violets ; il comporte aussi un revêtement anti-reflets spécifique, favorisant l'état de veille.

L'objet de l'invention est un verre oculaire destiné à équiper une lunette binoculaire de protection des yeux contre les rayonnements solaires nocifs, comportant un substrat de verre transparent présentant une face externe convexe dirigée vers les rayonnements, et une face interne concave dirigée vers l'oeil à protéger, ce substrat comportant sur sa face externe convexe, au moins un revêtement transparent de filtrage, de type passe-bas, destiné à éliminer les rayons infra-rouges présents dans les rayonnements solaires, caractérisé en ce que le substrat comporte en outre, sur sa face interne concave, au moins un revêtement anti-reflets, et sur sa face externe convexe, au moins un revêtement de filtrage de type passe-haut pour éliminer les rayons ultra-violets présents dans le rayonnement énergétique solaire.

Selon une autre caractéristique de l'invention, le revêtement de filtrage de type passe-haut est appliqué directement sur le substrat du côté de la face convexe, le revêtement de filtrage de type passe-bas étant déposé postérieurement sur le revêtement de type passe-haut.

Selon une autre caractéristique, le revêtement de filtrage de type passe-bas est appliqué directement sur le substrat du côté de la face convexe, le revêtement de type passe-haut étant déposé postérieurement sur le revêtement de type passe-bas.

Selon une autre caractéristique, les revêtements de types passe-haut et passe-bas sont des revêtements dichroïques.

Selon une autre caractéristique, le substrat est un verre coloré ou neutre. Le mode préféré de réalisation est cependant un substrat de verre neutre, assurant une transmission uniforme de toutes les couleurs.

Les caractéristiques et avantages de l'invention ressortiront mieux de la description qui va suivre, donnée en référence aux dessins annexés dans lesquels :

La figure 1 est un tableau qui donne les différentes plages de longueurs d'ondes des rayonnements ultra-violets (UV.C, UV.B, UV.A), du spectre des radiations visibles, et les longueurs d'onde du rayonnement infrarouge (IR.A, IR.B, IR.C).

La figure 2 représente schématiquement et en coupe, un verre oculaire de l'art antérieur, pour la protection contre les rayonnements solaires nocifs.

La figure 3 est un diagramme qui représente schématiquement la variation de la transmission spectrale T du verre oculaire de la figure 2, en fonction des longueurs d'ondes λ du spectre des radiations solaires.

La figure 4 représente schématiquement et en coupe un mode de réalisation d'un verre oculaire conforme à l'invention.

La figure 5 représente schématiquement et en coupe un autre mode de réalisation d'un verre oculaire conforme à l'invention .

La figure 6 est un diagramme qui représente schématiquement un exemple de variation de la transmission spectrale T d'un verre oculaire conforme à l'invention, en fonction des longueurs d'onde λ du spectre des radiations solaires.

Le tableau de la figure I montre que le spectre des rayonnements visibles s'étend de 0,38 à 0,78μm ; il fait apparaître la nécessité d'empêcher la transmission vers l'oeil, des rayonnements ayant des longueurs d'ondes inférieures à 0,40μm (radiations ultra-violettes). De la même manière, ce tableau fait aussi apparaître la nécessité d'empêcher la transmission vers l'oeil, des rayonnements infra-rouges particulièrement nocifs dans la zone infra-rouge proche (longueurs d'ondes comprises entre 0,78μm et 1,2μm.

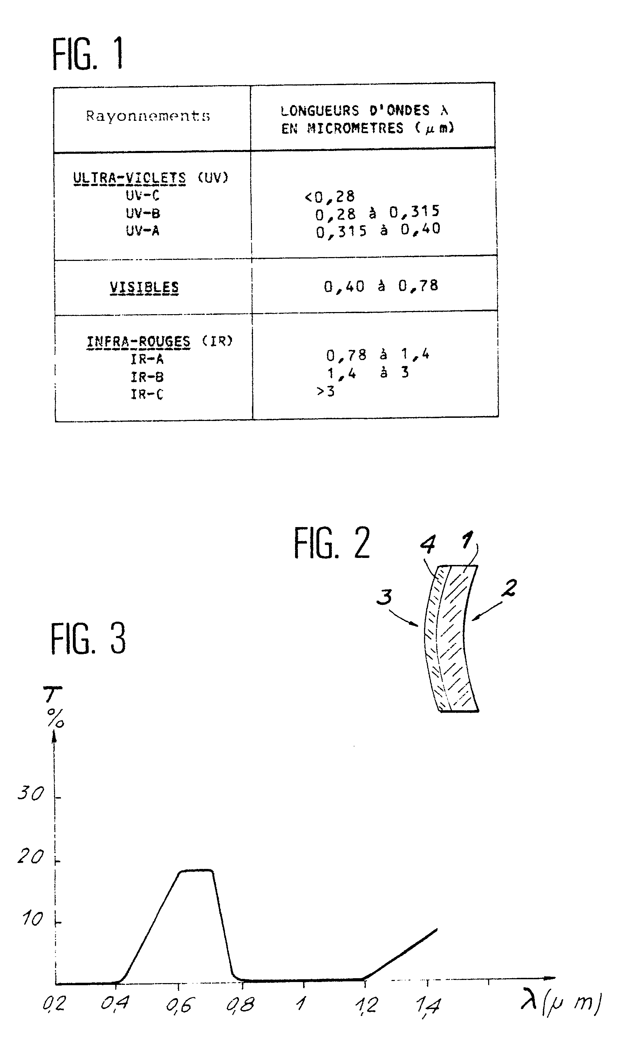

La figure 2 représente schématiquement et en coupe, un verre oculaire de protection contre les rayonnements solaires, connu dans l'état de la technique Il comporte un substrat 1 de verre coloré, assurant un filtrage des rayonnements ultra-violets et au-delà des rayonnements bleus. Ce substrat possède une face interne concave 2 dirigée vers l'oeil à protéger et une face externe convexe 3 dirigée vers les rayonnements à filtrer. La face externe convexe comporte un revêtement 4 de filtrage, de type passe-bas, assurant un filtrage des rayonnements infra-rouges proches. Le substrat coloré 1, généralement marron, provoque une vision dominante dans cette couleur, au détriment des autres couleurs du spectre visible.

La figure 3 est un diagramme qui représente schématiquement la variation de la transmission spectrale T du verre oculaire de la figure 2 et permet de mieux comprendre les défauts essentiels de ce verre : les radiations bleues (0,4μm - 0,5μm) sont très atténuées et la coupure des radiations ultra-violettes est progressive au lieu d'être abrupte. Enfin, le niveau de transmission spectrale est faible (au plus 20% des rayonnements reçus), ce qui n'est pas toujours souhaitable. Ce verre oculaire qui ne comporte aucun revêtement anti-reflets, ne favorise pas la vision latérale.

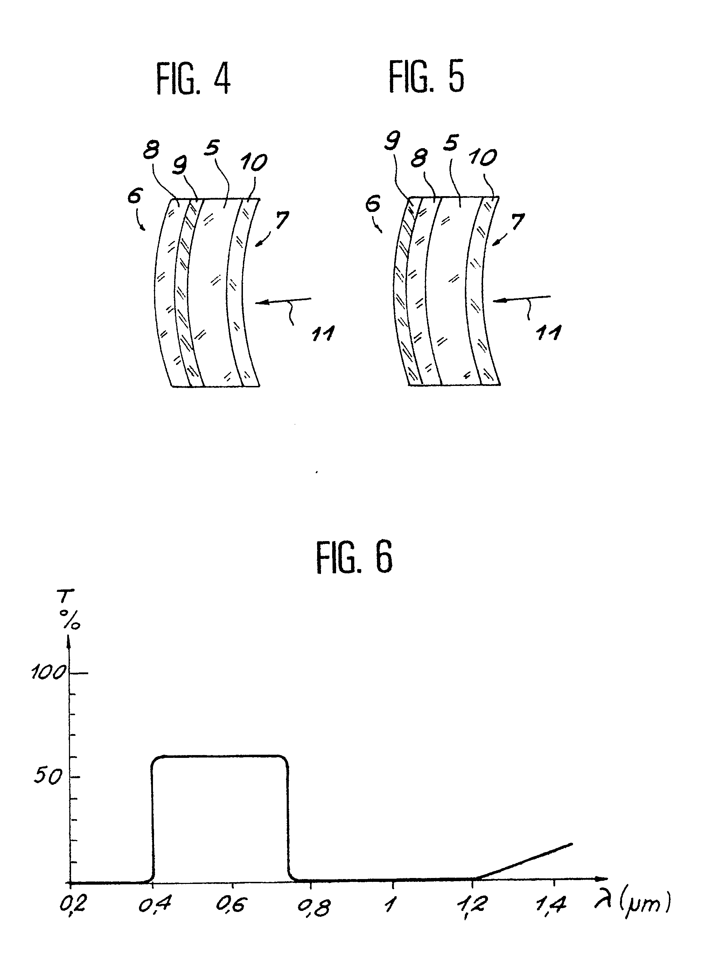

La figure 4 représente schématiquement et en coupe, un mode de réalisation d'un verre oculaire conforme à l'invention.

Ce verre oculaire comporte un substrat 5 de verre qui, selon l'invention, est transparent et de préférence, neutre (c'est-à-dire incolore ou gris); il présente par conséquent une transmission spectrale uniforme dans toutes les longueurs d'ondes du spectre visible. Cette transmission spectrale peut être élevée.

Le substrat présente une face externe convexe 6 dirigée vers les rayonnements, et une face interne concave 7 dirigée vers l'oeil à protéger. Il comporte, sur sa face externe au moins un revêtement transparent 8 de filtrage, de type passe-bas, pour éliminer parmi les rayons infrarouges solaires, les plus nocifs d'entre eux.

Selon l'invention, on dépose sur la face convexe du substrat 5, au moins un revêtement transparent de filtrage 9, de type passe-haut, pour éliminer les rayonnements ultra-violets nocifs dans le cas où ceux-ci ne sont pas correctement filtrés par le matériau constituant le substrat. Le substrat peut être un verre coloré. Ceci a une incidence sur la transmission des radiations visibles, mais n'affecte en rien la qualité des filtrages anti-ultra-violets et anti-infra-rouges. Un substrat coloré peut dans certains cas favoriser la vue, par temps de brouillard par exemple.

Un revêtement anti-reflets 10, recouvre la face concave du substrat 5. Ce revêtement permet d'éliminer la quasi totalité des rayonnements du spectre visible, émis par des sources parasites, dans un sens opposé à celui des rayons à filtrer, comme indiqué par la flèche 11. Les rayonnements nocifs pouvant le cas échéant provenir de l'arrière, et qui sont réfléchis aux différents interfaces entre le substrat et les revêtements décrits, avant de parvenir à l'oeil, subissent une absorption importante par la double traversée du substrat. Dans le cas d'un substrat de verre non absorbant (neutre ou incolore, une monture appropriée n'autorisant que l'accès des rayons venant de l'avant, dans le sens de la flèche 6, sera utilisée. L'élimination des rayonnements visibles parasites favorise l'état de veille, c'est-à-dire la vision des objets en mouvement, situés latéralement par rapport à l'axe de vision d'un observateur, porteur d'une lunette munie d'oculaires tels que décrits.

Le revêtement de filtrage 9, de type passe-haut est ici directement placé sur le substrat 5 il est recouvert par le revêtement de filtrage 8, de type passe-bas.

La figure 5 représente schématiquement un autre mode de réalisation d'un verre oculaire conforme à l'invention. Les mêmes éléments portent les mêmes références sur cette figure et sur la figure 4.

Les revêtements de filtrage 8 et 9, respectivement de type passe-bas et passe-haut, sont ici encore disposés du côté de la face convexe 6 du substrat 5. Toutefois, dans ce mode de réalisation, c'est le revêtement de filtrage 8 de type passe-bas qui recouvre le substrat 5, tandis que le revêtement 9 de type passe-haut est déposé sur le revêtement 8, de type passe-bas. Bien entendu, ici encore, le revêtement anti-reflets 10 recouvre la face concave 7 du substrat 1.

Pour les deux modes de réalisation représentés sur les figures 4 et 5, les revêtements de filtrage sont de type dichroïque, assurant une coupure très nette entre des régions spectrales de longueurs d'ondes différentes.

La figure 6 est un diagramme montrant un exemple de variation de la transmission spectrale T du verre oculaire de l'invention, en fonction des longueurs d'ondes$\lambda$ des rayonnements solaires. Cette figure montre notamment que la transmission T peut être importante (ici supérieure à 50%, pour un substrat neutre, sur la partie visible du spectre

(entre 0,40μm et 0,78μm).

Elle peut varier selon les besoins de l'utilisateur de 10 à 90%. Le filtrage type passe-bas assurant une élimination abrupte du proche infrarouge à partir de 0,78μm, est réalisé à l'aide d'un revêtement double-dichroïque, la remontée du diagramme, à partir de 1,2μm, dans la zone des infrarouges moins nocifs est, elle, beaucoup plus lente. Lorsque le substrat est neutre, de transmission uniforme dans toutes les couleurs du spectre visible, la vision des couleurs est parfaite et ne présente ainsi aucune dominante dans une couleur particulière.

Comme ceci n'est pas indispensable dans le cas présent, le détail de la structure des revêtements 8, 9 de filtrage de types passe-bas et passe-haut, et du revêtement anti-reflets 10, n'est pas décrite ici en détail. Il suffit de noter que les revêtements 8 et 9 sont constitués par exemple de couches alternées de TiO2 et SiO2.

**Revendications**

1. Verre oculaire destiné à équiper une lunette binoculaire de protection des yeux contre les rayonnements solaires nocifs, comportant un substrat (5) de verre transparent présentant une face externe convexe (6) dirigée vers les rayonnements, et une face interne concave (7) dirigée vers l'oeil à protéger, ce substrat comportant sur sa face externe convexe (6), au moins un revêtement transparent de filtrage (8), de type passe-bas destiné à éliminer les rayons infra-rouges nocifs présents dans les rayonnements solaires, caractérisé en ce que le substrat comporte en outre sur sa face concave (7), au moins un revêtement anti-reflets (10), et sur sa face externe convexe (6), au moins un revêtement de filtrage (9), de type passe-haut, pour éliminer les rayons ultra-violets présents dans le rayonnement énergétique solaire.

2. Verre oculaire selon la revendication 1, caractérisé en ce que le revêtement transparent de filtrage (9) de type passe-haut est appliqué directement sur le substrat du côté de la face convexe (6), le revêtement de filtrage (8) de type passe-bas étant déposé postérieurement sur le revêtement (9) de type passe-haut.

3. Verre oculaire selon la revendication 1, caractérisé en ce que le revêtement transparent de filtrage (8) de type passe-bas est appliqué directement sur le substrat du côté de la face convexe (6), le revêtement de filtrage (9, de type passe-haut étant déposé postérieurement sur le revêtement (8) de type passe-bas.

4. Verre oculaire selon l'une quelconque des revendications 1 à 3, caractérisé en ce que les revêtements (8,9) de types passe-bas et passe-haut sont des revêtements dichroïques.

5. Verre oculaire selon l'une quelconque des revendications 1 à 4, caractérisé en ce que le substrat est un verre neutre.

6. Verre oculaire selon l'une quelconque des revendications 1 à 4, caractérisé en ce que le substrat est un verre coloré.

# FIG. 1

| Rayonnements | LONGUEURS D'ONDES λ EN MICROMETRES ($\mu$ m) |
|---|---|
| ULTRA-VIOLETS (UV)<br>UV-C<br>UV-B<br>UV-A | <0,28<br>0,28 à 0,315<br>0,315 à 0,40 |
| VISIBLES | 0,40 à 0,78 |
| INFRA-ROUGES (IR)<br>IR-A<br>IR-B<br>IR-C | 0,78 à 1,4<br>1,4 à 3<br>>3 |

# FIG. 2

# FIG. 3

# FIG. 4

# FIG. 5

# FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-E- 27 473 (P.B. MAUER) <br> * Colonnes 1-2 * <br> --- | 1-6 | G 02 C  7/10 |
| A | US-A-4 045 125 (G. FARGES) <br> * Colonnes 1-4 * <br> --- | 1-6 | |
| A | US-A-3 756 692 (D.D. SCOTT) <br> * Abrégé * <br> --- | 1 | |
| A | US-A-3 382 183 (H.C. DONOIAN) <br> * Colonne 1, lignes 31-72; colonnes 2-3; colonne 4, lignes 1-67 * <br> --- | 1 | |
| A | EP-A-0 115 656 (G.E. WHITE) <br> * Pages 1-4; page 5, lignes 1-6 * <br> --- | 1 | |
| A | US-A-3 298 959 (A.M. MARKS) <br> * Figure 1; colonne 1; colonne 2, lignes 1-63 * <br> --- | 1 | |
| A | WO-A-8 808 340 (J.R. RICHARDS) <br> * Page 1, abrégé * <br> --- | 1,4 | **DOMAINES TECHNIQUES RECHERCHES (Int. Cl.5)** |
| A | US-A-3 269 267 (R.D. COLLINS) <br> ----- | | G 02 C  7/10 <br> G 02 B  5/22 <br> G 02 B  5/20 |

Le présent rapport a été établi pour toutes les revendications

| Lieu de la recherche | Date d'achèvement de la recherche | Examinateur |
|---|---|---|
| LA HAYE | 06-09-1990 | CALLEWAERT-HAEZEBROUCK H |